# EUROPEAN PATENT APPLICATION

(11) **EP 4 572 230 A1**
(43) Date of publication of application: **18.06.2025**
(21) Application number: 22954673.4
(22) Date of filing: 12.08.2022
(51) Int. Cl.: H04L 9/40

(54) **APPLICATION PROGRAM INTERFACE (API) INVOKING METHOD AND DEVICE**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Dehns Germany Partnerschaft mbB
(86) International application number: PCT/CN2022/112325
(87) International publication number: WO 2024/031723

(57) **Abstract**

The present disclosure provides an application program interface (API) invoking method and device. The method comprises: sending to a CAPIF authentication and authorization function a first token request message for requesting to acquire a token, wherein the token is used for authorizing an API invoker to acquire, modify or configure a target resource of a target resource owner; receiving a token response message that is sent by the CAPIF authentication and authorization function and carries the token; sending to an AEF a service API invoking request message carrying the token; and receiving a service API invoking response message returned by the AEF, wherein the service API invoking response message carries the target resource. In the present disclosure, the API invoker can acquire the target resource of the target resource owner on the basis of user authorization, wherein the API invoker is the target resource owner, so that the objective of enabling user authorization during the process of API invoking is achieved, and the availability is high.

## Description

### TECHNICAL FIELD

The present disclosure relates to the field of communications, and more particularly, to a method and apparatus for invoking an Application Program Interface (API).

### BACKGROUND

One of the objectives of the study on Subscriber-aware Northbound API access (SNA) Application (SNAAPP) security is about obtaining authorization from the resource owner. Current regulations allow the UE to provide and/or revoke consent for information (e.g., location, presence) to be shared with the third-party. In addition, in SNA scenarios, the Application Program Interface (API) invoker may request consent for obtaining or setting resources (e.g., location, presence) that is owned by itself. However, there is no existing mechanism to enable user authorization for such case in API invocation scenarios.

### SUMMARY

In order to overcome problems in the related arts, embodiments of the present disclosure provide a method and apparatus for invoking an Application Program Interface (API).

According to a first aspect of embodiments of the present disclosure, there is provided a method for invoking an Application Program Interface (API), which is performed by an API invoker. The method includes:
sending to a Common API Framework (CAPIF) authentication/authorization function a first token request message configured to request a token, wherein the token is configured to authorize the API invoker to obtain, modify or set a target resource of a target resource owner;
receiving a token response message sent by the CAPIF authentication/authorization function, wherein the token is carried in the token response message;
sending a service API invocation request message to an API Exposure Function (AEF) based on the token; and
receiving a service API invocation response message returned by the AEF, wherein the target resource is carried in the service API invocation response message.

According to a second aspect of embodiments of the present disclosure, there is provided a method for invoking an Application Program Interface (API), which is performed by a Common API Framework (CAPIF) authentication/authorization function. The method includes:
receiving a first token request message sent by an API invoker, wherein the first token request message is configured to request a token, and the token is configured to authorize the API invoker to obtain a target resource of a target resource owner;
determining, based on the first token request message, that the API invoker is the target resource owner; and
sending a token response message to the API invoker, wherein the token is carried in the token response message.

According to a third aspect of embodiments of the present disclosure, there is provided a method for invoking an Application Program Interface (API), which is performed by an API Exposure Function (AEF). The method includes:
receiving a service API invocation request message sent by an API invoker;
in response to a token being carried in the service API invocation request message, determining a verification result of the token, wherein the token is configured to authorize the API invoker to obtain, modify or set a target resource of a target resource owner; and
in response to the verification result indicating that the token is valid and information in the service API invocation request message matching information in the token, sending a service API invocation response message to the API invoker, wherein the target resource is carried in the service API invocation response message.

According to a fourth aspect of embodiments of the present disclosure, there is provided an apparatus for invoking an Application Program Interface (API), which is applied to an API invoker. The apparatus includes:
a first sending module, configured to send to a Common API Framework (CAPIF) authentication/authorization function a first token request message configured to request a token, wherein the token is configured to authorize the API invoker to obtain, modify or set a target resource of a target resource owner;
a first receiving module, configured to receive a token response message sent by the CAPIF authentication/authorization function, wherein the token is carried in the token response message;
a second sending module, configured to send a service API invocation request message to an API Exposure Function (AEF) based on the token; and
a second receiving module, configured to receive a service API invocation response message returned by the AEF, wherein the target resource is carried in the service API invocation response message.

According to a fifth aspect of embodiments of the present disclosure, there is provided an apparatus for invoking an Application Program Interface (API), which is applied to a Common API Framework (CAPIF) authentication/authorization function. The apparatus includes:
a third receiving module, configured to receive a first token request message sent by an API invoker, wherein the first token request message is configured to request a token, and the token is configured to authorize the API invoker to obtain a target resource of a target resource owner;
a determination module, configured to determine, based on the first token request message, that the API invoker is the target resource owner; and
a third sending module, configured to send a token response message to the API invoker, wherein the token is carried in the token response message.

According to a sixth aspect of embodiments of the present disclosure, there is provided an apparatus for invoking an Application Program Interface (API), which is applied to an API Exposure Function (AEF). The apparatus includes:
a fourth receiving module, configured to receive a service API invocation request message sent by an API invoker;
a verification module, configured to, in response to a token being carried in the service API invocation request message, determine a verification result of the token, wherein the token is configured to authorize the API invoker to obtain, modify or set a target resource of a target resource owner; and
a fourth sending module, configured to, in response to the verification result indicating that the token is valid and information in the service API invocation request message matching information in the token, send a service API invocation response message to the API invoker, wherein the target resource is carried in the service API invocation response message.

According to a seventh aspect of embodiments of the present disclosure, there is provided an apparatus for invoking an Application Program Interface (API), including:
a processor; and
a memory configured to store processor-executable instructions;
wherein the processor is configured to execute any method for invoking the Application Program Interface (API) on the API invoker side as described above.

According to an eighth aspect of embodiments of the present disclosure, there is provided an apparatus for invoking an Application Program Interface (API), including:
a processor; and
a memory configured to store processor-executable instructions;
wherein the processor is configured to execute any method for invoking the Application Program Interface (API) on the CAPIF authentication/authorization function side as described above.

According to a ninth aspect of embodiments of the present disclosure, there is provided an apparatus for invoking an Application Program Interface (API), including:
a processor; and
a memory configured to store processor-executable instructions;
wherein the processor is configured to execute any method for invoking the Application Program Interface (API) on the AEF side as described above.

The technical solutions provided by embodiments of the present disclosure may have the following beneficial effects.

In the present disclosure, the API invoker can obtain the target resource of the target resource owner based on user authorization, where the API invoker is the target resource owner, thereby achieving the purpose of enabling user authorization during an API invocation procedure, with high availability.

It should be noted that the above general description and the following detailed description are merely illustrative and explanatory and should not be construed as limiting of the disclosure.

### BRIEF DESCRIPTION OF THE DRAWINGS

The accompanying drawings here, which are incorporated in and constitute a part of the description, illustrate embodiments consistent with the present disclosure and, together with the description, serve to explain principles of the present disclosure.
FIG. 1 is a schematic flowchart showing a method for invoking an API according to an embodiment.
FIG. 2 is a schematic flowchart showing another method for invoking an API according to an embodiment.
FIG. 3 is a schematic flowchart showing another method for invoking an API according to an embodiment.
FIG. 4 is a schematic flowchart showing another method for invoking an API according to an embodiment.
FIG. 5 is a schematic flowchart showing another method for invoking an API according to an embodiment.
FIG. 6 is a schematic flowchart showing another method for invoking an API according to an embodiment.
FIG. 7 is a schematic flowchart showing another method for invoking an API according to an embodiment.
FIG. 8 is a block diagram showing an apparatus for invoking an API according to an embodiment.
FIG. 9 is a block diagram showing another apparatus for invoking an API according to an embodiment
FIG. 10 is a block diagram showing another apparatus for invoking an API according to an embodiment
FIG. 11 is a schematic structural diagram showing an apparatus for invoking an API according to an embodiment of the present disclosure.
FIG. 12 is a schematic structural diagram showing another apparatus for invoking an API according to an embodiment of the present disclosure.
FIG. 13 is a schematic structural diagram showing another apparatus for invoking an API according to an embodiment of the present disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the present disclosure. Instead, they are merely examples of apparatuses and methods consistent with some aspects related to the present disclosure as recited in the appended claims.

The terms used in the present disclosure are merely for the purpose of describing particular embodiments and are not intended to limit the present disclosure. As used in the present disclosure and the appended claims, the singular forms "a", "the" and "said" are intended to include the plural forms as well, unless the context clearly indicates otherwise. It should also be understood that the term "and/or" as used herein refers to and includes any or all possible combinations of at least one associated listed items.

It should be understood that, although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the word "in response to" as used herein can be interpreted as "upon" or "when" or "in response to determination".

In the present disclosure, it can be assumed that a User Equipment (UE) is a target resource owner, and an API invoker is a UE or an Application Function (AF) in a SNA scenario. The API invoker obtains a target resource of the target resource owner based on user authorization, and the API invoker is a target resource owner.

The following first introduces a method for invoking an API provided by the present disclosure from the API invoker side.

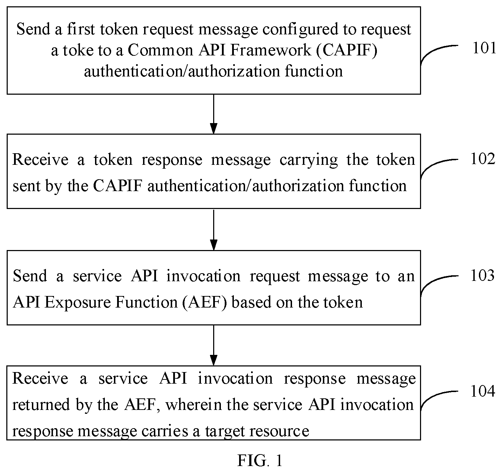

Embodiments of the present disclosure provide a method for invoking an API, as shown in FIG. 1. FIG. 1 is a flowchart showing a method for invoking an API according to an embodiment, which may be performed by an API invoker. The API invoker may be a UE or an Application Function (AF), which is not limited in the present disclosure. The method may include steps 101 to 104.

In the step 101, a first token request message configured to request a token is sent to a Common API Framework (CAPIF) authentication/authorization function.

In embodiments of the present disclosure, the CAPIF authentication/authorization function may include but is not limited to a CAPIF core function (CCF), and an authorization function. Alternatively, the CAPIF authentication/authorization function may be implemented through a network function deployed by an operator, including but not limited to a Network Exposure Function (NEF).

In embodiments of the present disclosure, the token is configured to authorize the API invoker to obtain, modify or set a target resource of a target resource owner. The API invoker is the target resource owner, and the target resource includes but is not limited to location information and Quality of Service (QoS) information of the target resource owner.

In an example, the first token request message may include but is not limited to at least one of: an identity of the API invoker; an identity of the target resource owner; an identity of the target resource; an identity of a service API requested by the API invoker; an identity of a service requested by the API invoker; or an identity of a service operation requested by the API invoker.

The identity of the API invoker includes but is not limited to the following three categories.

The first category is a terminal identity of the API invoker, including but not limited to an IP Multimedia Private Identity (IMPI) of the API invoker, a Generic Public Subscription Identifier (GPSI) of the API invoker, an Application layer ID of the API invoker, an AKMA key identifier (A-KID) of the API invoker, a Bootstrapping Transaction Identifier (B-TID) of the API invoker, or a Subscription Concealed Identifier (SUCI) of the API invoker.

The second category is an Application Function ID or an Application ID.

The third category is an Application Function Group ID or an Application Group ID.

The identity of the target resource owner may include but is not limited to an IMPI of a target UE, a GPSI of the target UE, an application layer ID of the target UE, an A-KID of the target UE, a B-TID of the target UE, or a SUCI of the target UE. The target UE is used to represent the target resource owner.

The identity of the target resource may identify the location information, the QoS information, etc. of the target resource owner.

In an example, the identity of the target resource owner included in the first token request message is identical to the identity of the API invoker, so that the CAPIF authentication/authorization function determines that the API invoker and the target resource owner are the same UE or the same AF.

In another example, the identity of the target resource owner included in the first token request message is different from the identity of the API invoker, but the identity of the target resource owner and the identity of the API invoker indicate the same User Equipment (UE) or Application Function (AF). The CAPIF authentication/authorization function may, according to preset identity mapping configuration information, map the identity of the API invoker to first identity information that is able to be authenticated, and map the identity of the target resource owner to second identity information that is able to be authenticated, and determine that the API invoker and the target resource owner are the same UE or the same AF by comparing the first identity information that is able to be authenticated with the second identity information that is able to be authenticated.

The first identity information includes but is not limited to an A-KID of the API invoker, a B-TID of the API invoker, a SUPI of the API invoker, and a GPSI of the API invoker.

The second identity information includes but is not limited to an A-KID of the target resource owner, a B-TID of the target resource owner, a SUPI of the target resource owner, and a GPSI of the target resource owner.

The identity of the service API requested by the API invoker may refer to an identity of an API that the API invoker requests the target resource owner to authorize.

The identity of the service requested by the API invoker may refer to an identity of a service that the API invoker requests the target resource owner to authorize.

The identity of the service operation requested by the API invoker may refer to an identity of a service operation that the API invoker requests the target resource owner to authorize.

In the step 102, a token response message carrying the token sent by the CAPIF authentication/authorization function is received.

In an embodiment of the present disclosure, the CAPIF authentication/authorization function may determine, based on the first token request message, that the API invoker is the target resource owner, and then send the token response message carrying the token to the API invoker.

In an example, the token includes but is not limited to at least one of: a token type; an identity of the CAPIF authentication/authorization function; an identity of the API invoker; an identity of an expected service API; an identity of a service requested by the API invoker; an identity of a service operation requested by the API invoker; an identity of the target resource; an identity of the target resource owner; an identity of the AEF; or a validity expiration time of the token.

The token type may be a refresh token or an access token.

The identity of the CAPIF authentication/authorization function includes but is not limited to the following three categories.

The first category is domain name information, including but not limited to a Fully Qualified Domain Name (FQDN) of the CAPIF authentication/authorization function and an address of the CAPIF authentication/authorization function, including but not limited to an Internet Protocol (IP) address of the CAPIF authentication/authorization function.

The second category is a Network Function ID or a Network Function instance ID (or NF instance ID) of the CAPIF authentication/authorization function.

The third category is a Network Function Set ID of the CAPIF authentication/authorization function, etc.

The identity of the API invoker includes but is not limited to the following three categories.

The first category is a terminal identity of the API invoker, including but not limited to an IMPI of the API invoker, a GPSI of the API invoker, an Application layer ID of the API invoker, an A-KID of the API invoker, a B-TID of the API invoker, or a SUCI of the API invoker.

The second category is an Application Function ID or an Application ID.

The third category is an Application Function Group ID or an Application Group ID.

The identity of the expected service API may refer to an identity of an API that the CAPIF authentication/authorization function expects to be able to serve the API invoker.

The identity of the service requested by the API invoker may refer to an identity of a service that the API invoker requests the target resource owner to authorize.

The identity of the service operation requested by the API invoker may refer to an identity of a service operation that the API invoker requests the target resource owner to authorize.

The identity of the target resource may identify the location information, the QoS information, etc. of the target resource owner.

The identity of the target resource owner includes but is not limited to an IP Multimedia Private Identity (IMPI) of the target resource owner, a Generic Public Subscription Identifier (GPSI) of the target resource owner, an Application layer ID of the target resource owner, an AKMA key identifier (A-KID) of the target resource owner, a Bootstrapping Transaction Identifier (B-TID) of the target resource owner, or a Subscription Concealed Identifier (SUCI) of the target resource owner.

In an embodiment of the present disclosure, the target resource owner and the API invoker are the same UE or the same AF.

The identity of the AEF includes but is not limited to the following three categories.

The first category is domain name information of the AEF, including but not limited to a FQDN and an IP address of the AEF.

The second category is a Network Function instance ID (or a NF instance ID) or a Network Function ID of the AEF.

The third category is a Network Function Set ID.

In the step 103, a service API invocation request message is sent to an API Exposure Function (AEF) based on the token.

In an embodiment of the present disclosure, when the API invoker obtains the token, in response to the token response message providing a first token whose token type is the refresh token, the API invoker may send a second token request message carrying the first token to the CAPIF function to request a second token whose token type is an access token.

The service API invocation request message sent by the API invoker to the API Exposure Function (AEF) carries the second token whose token type is the access token.

In response to the token response message providing the second token whose token type is the access token, the API invoker directly sends the service API invocation request message to the AEF, and the service API invocation request message carries the second token whose token type is the access token.

In the step 104, a service API invocation response message returned by the AEF is received, and the service API invocation response message carries the target resource.

In embodiments of the present disclosure, the AEF determines that a verification result of the token is valid, which means that the verification result, by the AEF, of the second token whose token type is the access token is valid. In a case where the authenticated first identity information is identical to the identity of the API invoker in a certificate, and information in the service API invocation request message matches information in the token, the service API invocation response message may be sent to the API invoker, and the service API invocation response message carries the target resource requested by the API invoker. A verification procedure of the AEF will be introduced on the AEF side later, which will not be introduced here. The first identity information includes but is not limited to the A-KID of the API invoker, the B-TID of the API invoker, the SUPI of the API invoker, and the GPSI of the API invoker.

In the above embodiments, the API invoker can obtain the target resource of the target resource owner based on user authorization, where the API invoker is the target resource owner, thereby achieving the purpose of enabling the user authorization during the API invocation procedure, with high availability.

In some embodiments, the API invoker may perform mutual authentication with the CAPIF authentication/authorization function in advance. The CAPIF authentication/authorization function may include but is not limited to the CAPIF core function and the CAPIF authentication/authorization function. Alternatively, the CAPIF authentication/authorization function may be implemented through a network function deployed by an operator, including but not limited to a NEF

In an implementation, the API invoker may perform the mutual authentication with the CAPIF authentication/authorization function based on a certificate.

In another implementation, the API invoker may perform the mutual authentication with the CAPIF authentication/authorization function based on a Generic Bootstrapping Architecture (GBA)-based authentication mechanism.

In another implementation, the API invoker may perform the mutual authentication with the CAPIF authentication/authorization function based on an Authentication and Key Management for Applications (AKMA)-based authentication mechanism.

In an example, the CAPIF authentication/authorization function is the CAPIF core function, the API invoker may authenticate the CAPIF core function based on the certificate, and the CAPIF core function may authenticate the API invoker based on the GBA-based authentication mechanism, the AKMA-based authentication mechanism or the certificate-based authentication mechanism.

The CAPIF core function may generate the certificate for the API invoker after the API invoker onboarding procedure.

In another example, the CAPIF authentication/authorization function is the authorization function, the API invoker may authenticate the authorization function based on the certificate, and the authorization function may authenticate the API invoker based on the GBA-based authentication mechanism, the AKMA-based authentication mechanism or the certificate-based authentication mechanism.

The certificate may be assigned by the CAPIF core function.

In embodiments of the present disclosure, when the mutual authentication between the API invoker and the CAPIF authentication/authorization function is passed, the API invoker may establish a first secure connection with the CAPIF authentication/authorization function via a Transport Layer Security (TLS).

Furthermore, the API invoker may send to the CAPIF authentication/authorization function, through the first secure connection, the first token request message configured to request the token.

The API invoker may receive, through the first secure connection, the token response message sent by the CAPIF authentication/authorization function, and the token response message carries the token.

In the above embodiments, the API invoker can perform the mutual authentication with the CAPIF authentication/authorization function. When the authentication is passed, the first secure connection is established to ensure the secure transfer of the first token request message and the token response message carrying the token, with high availability.

In some embodiments, in response to the API invoker obtaining the first token whose token type is the refresh token, the API invoker may send the second token request message to the CAPIF authentication and authorization function, requesting the second token whose token type is the access token through the second token request message, and the second token request message may carry the first token.

The CAPIF authentication/authorization function may include but is not limited to the CAPIF core function and the authorization function. Alternatively, the CAPIF authentication/authorization function may be implemented through the network function deployed by the operator, including but not limited to the NEF.

Further, in response to receiving the second token whose token type is the access token returned by the CAPIF authentication/authorization function, the API invoker may send to the AEF the service API invocation request message carrying the second token.

It should be noted that in the present disclosure, the API invoker obtains, through the first token whose token type is the refresh token, the second token whose token type is the access token from the CAPIF authentication/authorization function. Authorization content of the token may remain unchanged, that is, authorization content of the first token is the same as authorization content of the second token. Alternatively, an authorization scope of the second token is smaller, but the authority of the second token whose token type is the access token cannot exceed the authority of the first token whose token type is the refresh token.

In embodiments of the present disclosure, mainly for security reasons, the first token whose token type is the refresh token may be used once a day to obtain the second token whose token type is the access token. The second token can be used only when there is an access behavior and is easy to be stolen. Since the second token is used less frequently, the security of using the first token whose token type is the refresh token is higher. In addition, in response to the theft of the second token whose token type is the access token, the first token whose token type is the refresh token can be used to request a new second token to perform an access behavior without obtaining a new token through user authorization.

In response to the API invoker obtaining the second token whose token type is the access token, the API invoker may directly send the service API invocation request message of the token to the AEF, and the service API invocation request message carries the second token.

In the above embodiments, the API invoker can ensure that the second token whose token type is the access token is sent to the AEF in the above manner, thereby ensuring the security and reliability of obtaining the target resource.

In some embodiments, the API invoker may perform mutual authentication with the AEF in advance.

In an implementation, the API invoker may perform the mutual authentication with the AEF based on a certificate.

In another implementation, the API invoker may perform the mutual authentication with the AEF based on a GBA-based authentication mechanism.

In another implementation, the API invoker may perform the mutual authentication with the AEF based on an AKMA-based authentication mechanism.

In an example, the API invoker may authenticate the AEF based on the certificate, and the AEF may authenticate the API invoker based on the GBA-based authentication mechanism, the AKMA-based authentication mechanism or the certificate-based authentication mechanism.

The certificate may be assigned by the CAPIF core function.

In embodiments of the present disclosure, when the mutual authentication between the API invoker and the AEF is passed, the API invoker may establish a second secure connection with the AEF via a TLS.

Furthermore, the API invoker sends, through the second secure connection, the service API invocation request message carrying the token to the AEF.

The API invoker may receive, through the second secure connection, the service API invocation response message returned by the AEF.

In the above embodiments, the API invoker can perform the mutual authentication with the AEF, and when the authentication is passed, the second secure connection is established, thereby ensuring the secure transfer of the token and the target resource, with high availability.

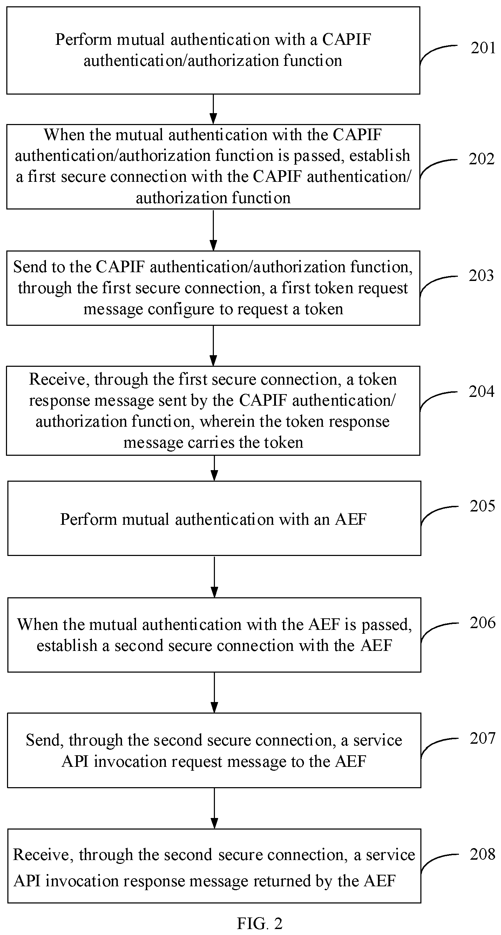

In some embodiments, reference is made to FIG. 2. FIG. 2 is a flowchart showing a method for invoking an API according to an embodiment, which may be performed by an API invoker. The API invoker may be a UE or an AF, which is not limited in the present disclosure. The method may include steps 201 to 208.

In the step 201, mutual authentication is performed with a CAPIF authentication/authorization function.

The CAPIF authentication/authorization function may include but is not limited to a CAPIF core function and an authorization function. Alternatively, the CAPIF authentication/authorization function may be implemented through a network function deployed by an operator, including but not limited to a NEF.

In an implementation, the API invoker may perform the mutual authentication with the CAPIF authentication/authorization function based on a certificate.

In another implementation, the API invoker may perform the mutual authentication with the CAPIF authentication/authorization function based on a Generic Bootstrapping Architecture (GBA)-based authentication mechanism.

In another implementation, the API invoker may perform the mutual authentication with the CAPIF authentication/authorization function based on an Authentication and Key Management for Applications (AKMA)-based authentication mechanism.

In an example, the CAPIF authentication/authorization function is the CAPIF core function, the API invoker may authenticate the CAPIF core function based on the certificate, and the CAPIF core function may authenticate the API invoker based on the GBA-based authentication mechanism, the AKMA-based authentication mechanism or the certificate-based authentication mechanism.

The CAPIF core function may generate the certificate for the API invoker after the API invoker onboarding procedure.

In another example, the CAPIF authentication/authorization function is the authorization function, the API invoker may authenticate the authorization function based on the certificate, and the authorization function may authenticate the API invoker based on the GBA-based authentication mechanism, the AKMA-based authentication mechanism or the certificate-based authentication mechanism.

The certificate may be assigned by the CAPIF core function.

In the step 202, when the mutual authentication with the CAPIF authentication/authorization function is passed, a first secure connection is established with the CAPIF authentication/authorization function.

In embodiments of the present disclosure, when the mutual authentication between the API invoker and the CAPIF authentication/authorization function is passed, the API invoker may establish the first secure connection with the CAPIF authentication/authorization function via a TLS.

In the step 203, a first token request message configure to request a token is sent to the CAPIF authentication/authorization function through the first secure connection.

In embodiments of the present disclosure, the token is configured to authorize the API invoker to obtain, modify or set a target resource of a target resource owner. The API invoker is the target resource owner, and the target resource includes but is not limited to location information, QoS information of the target resource owner.

In an example, the first token request message may include but is not limited to at least one of: an identity of the API invoker; an identity of the target resource owner; an identity of the target resource; an identity of a service API requested by the API invoker; an identity of a service requested by the API invoker; or an identity of a service operation requested by the API invoker.

The specific information content is the same as the information content included in the first token request message in the step 101, which will not be repeated here.

In an example, the identity of the target resource owner included in the first token request message is identical to the identity of the API invoker, and the identity of the API invoker and the identity of the target resource owner can both be mapped to first identity information of the API invoker through a preset mapping configuration strategy, and the CAPIF authentication/authorization function determines that the API invoker and the target resource owner are the same UE or the same AF.

In another example, the identity of the target resource owner included in the first token request message is different from the identity of the API invoker, but the identity of the target resource owner and the identity of the API invoker indicate the same User Equipment (UE) or Application Function (AF). The CAPIF authentication/authorization function may, according to preset identity mapping configuration information, map the identity of the API invoker to first identity information that is able to be authenticated, and map the identity of the target resource owner to second identity information that is able to be authenticated, and in response to the first identity information that is able to be authenticated being the same as the second identity information that is able to be authenticated, determine that the API invoker and the target resource owner are the same UE or the same AF.

The first identity information includes but is not limited to the identity of the API invoker as previously mentioned. In some embodiments, the first identity information includes but is not limited to the A-KID of the API invoker, the B-TID of the API invoker, the SUPI of the API invoker, and the GPSI of the API invoker.

The second identity information includes but is not limited to the A-KID of the target resource owner, the B-TID of the target resource owner, the SUPI of the target resource owner, and the GPSI of the target resource owner.

In the step 204, a token response message sent by the CAPIF authentication/authorization function is received through the first secure connection, and the token response message carries the token.

In an embodiment of the present disclosure, the CAPIF authentication/authorization function may determine, based on the first token request message, that the API invoker is the target resource owner, and then send the token response message carrying the token to the API invoker.

In an example, the token includes but is not limited to at least one of: a token type; an identity of the CAPIF authentication/authorization function; an identity of the API invoker; an identity of an expected service API; an identity of a service requested by the API invoker; an identity of a service operation requested by the API invoker; an identity of the target resource; an identity of the target resource owner; an identity of the AEF; or a validity expiration time of the token.

The token type may be a refresh token or an access token. The identity of the CAPIF authentication/authorization function includes but is not limited to the following three categories.

The first category is domain name information, including but not limited to a Fully Qualified Domain Name (FQDN) of the CAPIF authentication/authorization function and an address of the CAPIF authentication/authorization function, including but not limited to an Internet Protocol (IP) address of the CAPIF authentication/authorization function.

The second category is a Network Function ID or a Network Function instance ID (or NF instance ID) of the CAPIF authentication/authorization function.

The third category is a Network Function Set ID of the CAPIF authentication/authorization function, etc.

The identity of the API invoker includes but is not limited to the following three categories.

The first category is a terminal identity of the API invoker, including but not limited to an IMPI of the API invoker, a GPSI of the API invoker, an Application layer ID of the API invoker, an A-KID of the API invoker, a B-TID of the API invoker, or a SUCI of the API invoker.

The second category is an Application Function ID or an Application ID.

The third category is an Application Function Group ID or an Application Group ID.

The identity of the expected service API may refer to an identity of an API that the CAPIF authentication/authorization function expects to be able to serve the API invoker.

The identity of the service requested by the API invoker may refer to an identity of a service that the API invoker requests the target resource owner to authorize.

The identity of the service operation requested by the API invoker may refer to an identity of a service operation that the API invoker requests the target resource owner to authorize.

The identity of the target resource may identify the location information, the QoS information, etc. of the target resource owner.

The identity of the target resource owner includes but is not limited to an IP Multimedia Private Identity (IMPI) of the target resource owner, a Generic Public Subscription Identifier (GPSI) of the target resource owner, an Application layer ID of the target resource owner, an AKMA key identifier (A-KID) of the target resource owner, a Bootstrapping Transaction Identifier (B-TID) of the target resource owner, or a Subscription Concealed Identifier (SUCI) of the target resource owner.

The identity of the AEF includes but is not limited to the following three categories.

The first category is domain name information of the AEF, including but not limited to a FQDN and an IP address of the AEF.

The second category is a Network Function instance ID (or a NF instance ID) or a Network Function ID of the AEF.

The third category is a Network Function Set ID.

In the step 205, mutual authentication is performed with the AEF.

In an implementation, the API invoker may perform the mutual authentication with the AEF based on a certificate.

In another implementation, the API invoker may perform the mutual authentication with the AEF based on a GBA-based authentication mechanism.

In another implementation, the API invoker may perform the mutual authentication with the AEF based on an AKMA-based authentication mechanism.

In an example, the API invoker may authenticate the AEF based on the certificate, and the AEF may authenticate the API invoker based on the GBA-based authentication mechanism, the AKMA-based authentication mechanism or the certificate-based authentication mechanism.

The certificate may be assigned by the CAPIF core function.

In the step 206, when the mutual authentication with the AEF is passed, a second secure connection is established with the AEF.

In embodiments of the present disclosure, when the mutual authentication between the API invoker and the AEF is passed, the API invoker may establish a second secure connection with the AEF via a TLS.

In the step 207, a service API invocation request message is sent to the AEF through the second secure connection.

The service API invocation request message sent by the API invoker to the AEF carries a second token whose token type is the access token.

In response to the API invoker obtaining, from the token response message, a first token whose token type is the refresh token, the API invoker may send a second token request message carrying the first token to the CAPIF function to request a second token. The API invoker sends the service API invocation request message to the AEF, and the service API invocation request message carries the second token provided by the CAPIF function. In the step 208, a service API invocation response message returned by the AEF is received through the second secure connection.

In embodiments of the present disclosure, in a case where the AEF determines that the verification result of the token is valid, the authenticated first identity information is identical to the identity of the API invoker in the token, and the information in the service API invocation request message matches the information in the token, the AEF may send the service API invocation response message to the API invoker, and the service API invocation response message carries the target resource requested by the API invoker. The first identity information includes but is not limited to the A-KID of the API invoker, the B-TID of the API invoker, the SUPI of the API invoker, and the GPSI of the API invoker.

In the above embodiments, the API invoker can obtain the target resource of the target resource owner based on user authorization, where the API invoker is the target resource owner, thereby achieving the purpose of enabling the user authorization during the API invocation procedure, with high availability.

Next, the method for invoking the API provided by the present disclosure is introduced from the CAPIF authentication/authorization function side.

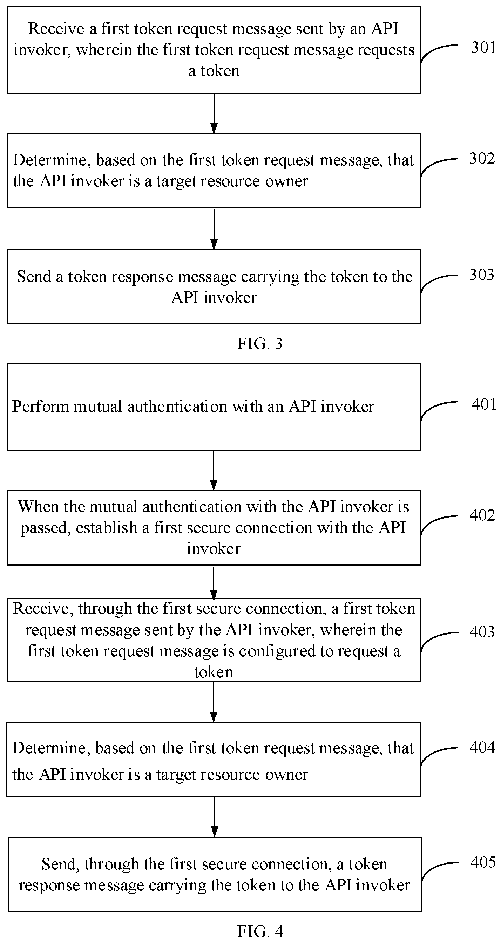

Embodiments of the present disclosure provide a method for invoking an API, as shown in FIG. 3. FIG. 3 is a flowchart showing a method for invoking an API according to an embodiment, which may be performed by a CAPIF authentication/authorization function. The CAPIF authentication/authorization function may include but is not limited to a CAPIF core function and an authorization function. Alternatively, the CAPIF authentication/authorization function may be implemented through a network function deployed by an operator, which is not limited in the present disclosure. The method may include steps 301 to 303.

In the step 301, a first token request message sent by an API invoker is received, and the first token request message requests a token.

In embodiments of the present disclosure, the API invoker may be a UE or an AF, which is not limited in the present disclosure.

In embodiments of the present disclosure, the token is configured to authorize the API invoker to obtain, modify or set a target resource of a target resource owner. The API invoker is the target resource owner, and the target resource includes but is not limited to location information and Quality of Service (QoS) information of the target resource owner.

In an example, the first token request message may include but is not limited to at least one of: an identity of the API invoker; an identity of the target resource owner; an identity of the target resource; an identity of a service API requested by the API invoker; an identity of a service requested by the API invoker; or an identity of a service operation requested by the API invoker.

The identity of the API invoker includes but is not limited to the following three categories.

The first category is a terminal identity of the API invoker, including but not limited to an IMPI of the API invoker, a GPSI of the API invoker, an Application layer ID of the API invoker, an A-KID of the API invoker, a B-TID of the API invoker, or a SUCI of the API invoker.

The second category is an Application Function ID or an Application ID.

The third category is an Application Function Group ID or an Application Group ID.

The identity of the target resource owner may include but is not limited to an IMPI of a target UE, a GPSI of the target UE, an application layer ID of the target UE, an A-KID of the target UE, a B-TID of the target UE, or a SUCI of the target UE. The target UE is used to represent the target resource owner.

The identity of the target resource may identify the location information, the QoS information, etc. of the target resource owner.

In an example, the identity of the target resource owner included in the first token request message is identical to the identity of the API invoker, so that the CAPIF authentication/authorization function determines that the API invoker and the target resource owner are the same UE or the same AF.

In another example, the identity of the target resource owner included in the first token request message is different from the identity of the API invoker, but the identity of the target resource owner and the identity of the API invoker indicate the same User Equipment (UE) or Application Function (AF). The CAPIF authentication/authorization function may, according to preset identity mapping configuration information, map the identity of the API invoker to first identity information that is able to be authenticated, and map the identity of the target resource owner to second identity information that is able to be authenticated, and in response to the first identity information that is able to be authenticated being the same as the second identity information that is able to be authenticated, determine that the API invoker and the target resource owner are the same UE or the same AF.

The first identity information includes but is not limited to an A-KID of the API invoker, a B-TID of the API invoker, a SUPI of the API invoker, and a GPSI of the API invoker.

The second identity information includes but is not limited to an A-KID of the target resource owner, a B-TID of the target resource owner, a SUPI of the target resource owner, and a GPSI of the target resource owner.

The identity of the service API requested by the API invoker may refer to an identity of an API that the API invoker requests the target resource owner to authorize.

The identity of the service requested by the API invoker may refer to an identity of a service that the API invoker requests the target resource owner to authorize.

The identity of the service operation requested by the API invoker may refer to an identity of a service operation that the API invoker requests the target resource owner to authorize.

In an example, the identity of the target resource owner included in the first token request message is identical to the identity of the API invoker.

In another example, the identity of the target resource owner included in the first token request message is different from the identity of the API invoker, but the identity of the target resource owner and the identity of the API invoker indicate the same User Equipment (UE) or the same AF.

In the step 302, based on the first token request message, it is determined that the API invoker is the target resource owner.

In an embodiment of the present disclosure, the CAPIF authentication/authorization function needs to first authenticate first identity information of the API invoker. Assuming that the API invoker has passed the authentication of the AKMA-based authentication mechanism, the CAPIF authentication/authorization function will obtain the identity of the API invoker from a core network, including but not limited to the SUPI or SUCI of the API invoker, and then the CAPIF authentication/authorization function determines that the first identity information of the API invoker has been authenticated.

In an example, when the CAPIF authentication/authorization function determines that the first identity information of the API invoker has been authenticated, in response to the identity of the API invoker in the first token request message being identical to the identity of the target resource owner, the CAPIF authentication/authorization function directly determines that the API invoker is the target resource owner.

The first identity information includes but is not limited to an A-KID of the API invoker, a B-TID of the API invoker, a SUPI of the API invoker, and a GPSI of the API invoker.

In another example, when the CAPIF authentication/authorization function determines that the first identity information of the API invoker has been authenticated, in response to the identity of the API invoker in the first token request message being different from the identity of the target resource owner, the CAPIF authentication/authorization function may, according to preset identity mapping configuration information, map the identity of the API invoker to the first identity information that is able to be authenticated, and map the identity of the target resource owner to second identity information that is able to be authenticated. The identity information that is able to be authenticated includes but is not limited to a SUPI or a SUCI.

The first identity information includes but is not limited to an A-KID of the API invoker, a B-TID of the API invoker, a SUPI of the API invoker, and a GPSI of the API invoker.

The second identity information includes but is not limited to an A-KID of the target resource owner, a B-TID of the target resource owner, a SUPI of the target resource owner, and a GPSI of the target resource owner.

Further, in response to the first identity information and the second identity information indicating the same UE or AF, the API invoker is determined to be the target resource owner.

In the step 303, a token response message carrying the token is sent to the API invoker.

In an embodiment of the present disclosure, the CAPIF authentication/authorization function may determine, based on the first token request message, that the API invoker is the target resource owner, and then send the token response message carrying the token to the API invoker.

In an example, the token includes but is not limited to at least one of: a token type; an identity of the CAPIF authentication/authorization function; an identity of the API invoker; an identity of an expected service API; an identity of a service requested by the API invoker; an identity of a service operation requested by the API invoker; an identity of the target resource; an identity of the target resource owner; an identity of the AEF; or a validity expiration time of the token.

The token type includes but is not limited to a refresh token or an access token.

The identity of the CAPIF authentication/authorization function includes but is not limited to the following three categories.

The first category is domain name information, including but not limited to a Fully Qualified Domain Name (FQDN) of the CAPIF authentication/authorization function and an address of the CAPIF authentication/authorization function, including but not limited to an Internet Protocol (IP) address of the CAPIF authentication/authorization function.

The second category is a Network Function ID or a Network Function instance ID (or NF instance ID) of the CAPIF authentication/authorization function.

The third category is a Network Function Set ID of the CAPIF authentication/authorization function, etc.

The identity of the API invoker includes but is not limited to the following three categories.

The first category is a terminal identity of the API invoker, including but not limited to an IMPI of the API invoker, a GPSI of the API invoker, an Application layer ID of the API invoker, an A-KID of the API invoker, a B-TID of the API invoker, or a SUCI of the API invoker.

The second category is an Application Function ID or an Application ID.

The third category is an Application Function Group ID or an Application Group ID.

The identity of the expected service API may refer to an identity of an API that the CAPIF authentication/authorization function expects to be able to serve the API invoker.

The identity of the service requested by the API invoker may refer to an identity of a service that the API invoker requests the target resource owner to authorize.

The identity of the service operation requested by the API invoker may refer to an identity of a service operation that the API invoker requests the target resource owner to authorize.

The identity of the target resource may identify the location information, the QoS information, etc. of the target resource owner.

The identity of the target resource owner includes but is not limited to an IMPI of the target resource owner, a GPSI of the target resource owner, an Application layer ID of the target resource owner, an A-KID of the target resource owner, a B-TID of the target resource owner, or a SUCI of the target resource owner.

In an embodiment of the present disclosure, the target resource owner and the API invoker are the same UE or the same AF.

The identity of the AEF includes but is not limited to the following three categories.

The first category is domain name information of the AEF, including but not limited to a FQDN and an IP address of the AEF.

The second category is a Network Function instance ID (or a NF instance ID) or a Network Function ID of the AEF.

The third category is a Network Function Set ID.

The CAPIF authentication/authorization function In the above embodiments, when receiving the authorization request message from the API invoker, the CAPIF authentication/authorization function can determine whether the API invoker is the target resource owner. In a case where the API invoker is the target resource owner, the CAPIF authentication/authorization function provides the token to the API invoker, thereby achieving the purpose of enabling the user authorization during the API invocation procedure, with high availability.

In some embodiments, in response to the token response message carrying a first token whose token type is the refresh token, the CAPIF authentication/authorization function may receive a second token request message carrying the first token, where the second token request message is sent by the API invoker when the API invoker needs to obtain the target resource, and when verifying that the first token is legal, the CAPIF authentication/authorization function may send a second token whose token type is the access token to the API invoker.

Alternatively, in response to the token response message carrying the second token whose token type is the access token, the API invoker can directly access the AEF based on the token whose token type is the access token, thereby obtaining the target resource, without sending the second token request message to the CAPIF authentication/authorization function.

In addition, when the API invoker obtains the second token, it does not need to obtain a new second token whose token type is the access token from the CAPIF function within a validity period of the second token.

In the above embodiments, the security and reliability of the API invoker in obtaining the target resource can be ensured through the above method.

In some embodiments, reference is made to FIG. 4. FIG. 4 is a flowchart showing a method for invoking an API according to an embodiment, which may be performed by a CAPIF authentication/authorization function. The CAPIF authentication/authorization function may include but is not limited to a CAPIF core function and a CAPIF authentication/authorization function. Alternatively, the CAPIF authentication/authorization function may be implemented through a network function deployed by an operator, which is not limited in the present disclosure. The method may include steps 401 to 405.

In the step 401, mutual authentication is performed with an API invoker.

In an implementation, the CAPIF authentication/authorization function may perform the mutual authentication with the API invoker based on a certificate.

In another implementation, the CAPIF authentication/authorization function may perform the mutual authentication with the API invoker based on a GBA-based authentication mechanism.

In another implementation, the CAPIF authentication/authorization function may perform the mutual authentication with the API invoker based on an AKMA-based authentication mechanism.

In an example, the CAPIF authentication/authorization function is the CAPIF core function, the API invoker may authenticate the CAPIF core function based on the certificate, and the CAPIF core function may authenticate the API invoker based on the GBA-based authentication mechanism, the AKMA-based authentication mechanism or the certificate-based authentication mechanism.

The CAPIF core function may generate the certificate for the API invoker after the API invoker onboarding procedure.

In another example, the CAPIF authentication/authorization function is the authorization function, the API invoker may authenticate the authorization function based on the certificate, and the authorization function may authenticate the API invoker based on the GBA-based authentication mechanism, the AKMA-based authentication mechanism or the certificate-based authentication mechanism.

The certificate may be assigned by the CAPIF core function.

In the step 402, when the mutual authentication with the API invoker is passed, a first secure connection is established with the API invoker.

In embodiments of the present disclosure, when the mutual authentication between the CAPIF authentication/authorization function and the API invoker is passed, the CAPIF authentication/authorization function may establish the first secure connection with the API invoker via a TLS.

In the step 403, a first token request message sent by the API invoker is received through the first secure connection, and the first token request message is configured to request a token.

In embodiments of the present disclosure, the API invoker may be a UE or an AF, which is not limited in the present disclosure.

In embodiments of the present disclosure, the token is configured to authorize the API invoker to obtain, modify or set a target resource of a target resource owner. The API invoker is the target resource owner, and the target resource includes but is not limited to location information and Quality of Service (QoS) information of the target resource owner.

In an example, the first token request message may include but is not limited to at least one of: an identity of the API invoker; an identity of the target resource owner; an identity of the target resource; an identity of a service API requested by the API invoker; an identity of a service requested by the API invoker; or an identity of a service operation requested by the API invoker.

The specific information content is the same as the information content included in the first token request message in the step 101, which will not be repeated here.

In the step 404, based on the first token request message, it is determined that the API invoker is the target resource owner.

The specific implementation is similar to the above step 302, which will not be repeated here.

In the step 405, a token response message carrying the token is sent to the API invoker through the first secure connection.

In the above embodiments, the CAPIF authentication/authorization function can perform the mutual authentication with the API invoker in advance, and when the authentication is passed, establish the first secure connection, and receive, through the first secure connection, the authorization request message sent by the API invoker. In a case where the CAPIF authentication/authorization function determines that the API invoker is the target resource owner, it provides the token to the API invoker, thereby achieving the purpose of enabling user authorization during the API invocation procedure, with high availability.

Next, the method for invoking the API provided by the present disclosure is introduced from the AEF side.

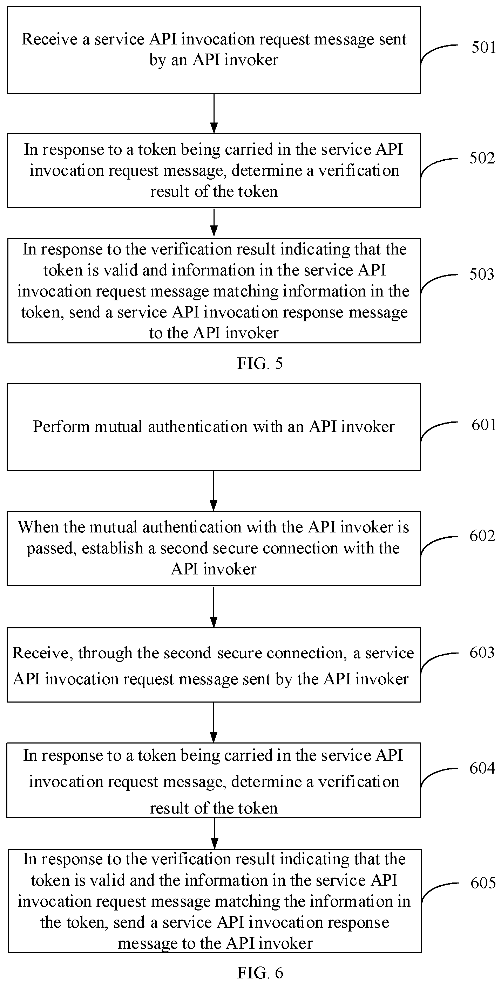

Embodiments of the present disclosure provide a method for invoking an API, as shown in FIG. 5. FIG. 5 is a flowchart showing a method for invoking an API according to an embodiment, which may be performed by an AEF. The method may include steps 501 to 503.

In the step 501, a service API invocation request message sent by an API invoker is received.

In the step 502, in response to a token being carried in the service API invocation request message, a verification result of the token is determined.

The token is configured to authorize the API invoker to obtain, modify or set a target resource of a target resource owner. The information included in the token has been introduced in the above embodiments, which will not be repeated here.

In an example, the AEF may verify the integrity of the token based on a public key of the CAPIF authentication/authorization function to determine the verification result.

In an example, the AEF may send the token to the CAPIF authentication/authorization function, and receive the verification result of the integrity of the token returned by the CAPIF authentication/authorization function.

In embodiments of the present disclosure, the AEF needs to determine a token type of the token, and when the token type is the access type, the AEF determines the verification result of the integrity of the token. In response to the token type of the token being the refresh token, the AEF may send a service API invocation rejection message, which may carry a rejection reason, and the rejection reason indicates that the token type cannot obtain the target resource.

In the step 503, in response to the verification result indicating that the token is valid and information in the service API invocation request message matching information in the token, a service API invocation response message is sent to the API invoker.

In an example, the information in the service API invocation request message includes at least one of: an identity of the API invoker; an identity of the target resource owner; an identity of the target resource; an identity of a service API requested by the API invoker; an identity of a service requested by the API invoker; or an identity of a service operation requested by the API invoker.

In an example, the token includes but is not limited to at least one of: a token type; an identity of the CAPIF authentication/authorization function; an identity of the API invoker; an identity of an expected service API; an identity of a service requested by the API invoker; an identity of a service operation requested by the API invoker; an identity of the target resource; an identity of the target resource owner; an identity of the AEF; or a validity expiration time of the token.

The explanation of the specific information included in the service API invocation request message and the token is the same as the explanation of the relevant information provided in the previous embodiments, which will not be repeated here.

The AEF needs to compare the information in the service API invocation request message with the information in the token to determine whether they are matched. In a case where the verification result indicates that the token is valid and the information in the service API invocation request message matches the information in the token, that is, a service API request initiated by the API invoker is within an authorization scope of the token, the AEF sends the service API invocation response message to the API invoker.

The target resource is carried in the service API invocation response message. In an implementation, in response to the token carried by the service API invocation request message including a geographic area where the API invoker is located when accessing the target resource, the AEF may send a location request message to a core network device, and the location request message is configured to request location information of the API invoker. In response to the location information provided by the core network device being consistent with the geographic area included in the token, the AEF executes the step 503, that is, in response to the verification result indicating that the token is valid and the information in the service API invocation request message matching the information in the token, the service API invocation response message is sent to the API invoker.

In the above embodiments, when receiving the API invocation request message sent by the API invoker, the AEF may, in response to the service API invocation request message carrying the token, verify the token. In a case where the verification result indicates that the token is valid and the token type of the token is determined to be the access token, the AEF sends the service API invocation response message to the API invoker, and the service API invocation response message carries the target resource, thereby achieving the purpose of enabling, during the API invocation procedure, user authorization to provide the target resource to the API invoker, with high availability.

In some embodiments, in response to the verification result indicating that the token is invalid, the AEF may terminate the API invocation procedure.

In the above embodiments, in response to the AEF determining that the token is invalid, the API invocation procedure can be terminated in time to ensure the security and reliability of the API invocation procedure.

In some embodiments, in response to the service API invocation request message not carrying the token, the AEF may send a service API invocation rejection message to the API invoker.

In some embodiments, the service API invocation rejection message may carry a rejection reason, which may be that the token is not carried.

In the above embodiments, in response to the service API invocation request message not carrying the token, the AEF may reject the request of the API invoker, thereby also ensuring the security and reliability of the API invocation procedure.

In some embodiments, the AEF may pre-authenticate first identity information of the API invoker. For example, the AEF has obtained the SUPI or SUCI of the API invoker from the core network. In addition, the AEF also needs to pre-verify the token of the API invoker, and the token may be provided by the CAPIF core function. The first identity information includes but is not limited to the A-KID of the API invoker, the B-TID of the API invoker, the SUPI of the API invoker, and the GPSI of the API invoker.

Further, in response to the authenticated first identity information being identical to the identity of the API invoker in the token, but the information in the service API invocation request message not matching the information in the token, the AEF may send the service API invocation rejection message to the API invoker.

Alternatively, in response to the identity of the API invoker in the token being able to be mapped to the authenticated first identity information, but the information in the service API invocation request message not matching the information in the token, the service API invocation rejection message is sent to the API invoker. The first identity information includes but is not limited to the A-KID of the API invoker, the B-TID of the API invoker, the SUPI of the API invoker, and the GPSI of the API invoker.

The information in the service API invocation request message includes: an identity of the API invoker; an identity of the target resource owner; an identity of the target resource; an identity of a service API requested by the API invoker; an identity of a service requested by the API invoker; and an identity of a service operation requested by the API invoker. The information in the token includes: a token type; an identity of the CAPIF authentication/authorization function; an identity of the API invoker; an identity of an expected service API; an identity of a service requested by the API invoker; an identity of a service operation requested by the API invoker; an identity of the target resource; an identity of the target resource owner; a geographic area where the API invoker is located when accessing the target resource; an identity of the AEF; and a validity expiration time of the token.

In a case where it is determined that the above information does not match, for example, the identity of the target resource in the service API request message is inconsistent with the identity of the target resource in the token, even if it is determined that the authenticated first identity information is identical to the identity of the API invoker in the certificate or the identity of the API invoker in the certificate can be mapped to the authenticated first identity information, the AEF will also reject the service API invocation request sent by the API, that is, send the service API invocation rejection message to the API invoker. The first identity information includes but is not limited to the A-KID of the API invoker, the B-TID of the API invoker, the SUPI of the API invoker, and the GPSI of the API invoker.

In addition, in response to the authenticated first identity information being identical to the identity of the API invoker in the token, in a case where the verification result indicates that the token is valid and the information in the service API invocation request message matches the information in the token, the AEF can send the service API invocation response message to the API invoker, and the service API invocation response message carries the target resource.

Alternatively, in response to the identity of the API invoker in the certificate being able to the authenticated first identity information, in a case where the verification result indicates that the token is valid and the information in the service API invocation request message matches the information in the token, the AEF sends the service API invocation response message to the API invoker, and the service API invocation response message carries the target resource.

In the above embodiments, the token AEF can reject or approve the service API invocation request initiated by the API invoker when the above conditions are fulfilled, ensuring the security and reliability of the API invocation procedure.

In some embodiments, reference is made to FIG. 6. FIG. 6 is a flowchart showing a method for invoking an API according to an embodiment, which may be performed by an AEF, and the present disclosure is not limited to this. The method may include steps 601 to 605.

In the step 601, mutual authentication is performed with an API invoker.

In some embodiments, the AEF may perform the mutual authentication with the API invoker in advance.

In an implementation, the AEF may perform the mutual authentication with the API invoker based on a certificate.

In another implementation, the AEF may perform the mutual authentication with the API invoker based on a GBA-based authentication mechanism.

In another implementation, the AEF may perform the mutual authentication with the API invoker based on an AKMA-based authentication mechanism.

In an example, the API invoker may authenticate the AEF based on the certificate, and the AEF may authenticate the API invoker based on the GBA-based authentication mechanism, the AKMA-based authentication mechanism or the certificate-based authentication mechanism.

The certificate may be assigned by the CAPIF core function.

In the step 602, when the mutual authentication with the API invoker is passed, a second secure connection is established with the API invoker.

In embodiments of the present disclosure, when the mutual authentication between the AEF and the API invoker is passed, the AEF may establish the second secure connection with the API invoker via a TLS.

In the step 603, a service API invocation request message sent by the API invoker is received through the second secure connection.

In the step 604, in response to a token being carried in the service API invocation request message, a verification result of the token is determined.

The token is configured to authorize the API invoker to obtain, modify or set a target resource of a target resource owner. The information included in the token has been introduced in the above embodiments, which will not be repeated here.

In embodiments of the present disclosure, the API invoker sends to the AEF a second token whose token type is the access token. In an example, the AEF may verify the integrity of the token based on a public key of the CAPIF authentication/authorization function to determine the verification result.

In an example, the AEF may send the token to the CAPIF authentication/authorization function, and receive the verification result of the integrity of the token returned by the CAPIF authentication/authorization function.

In addition to verifying the integrity of the token, the AEF also needs to pre-authenticate first identity information of the API invoker. The first identity information includes but is not limited to an A-KID of the API invoker, a B-TID of the API invoker, a SUPI of the API invoker, and a GPSI of the API invoker. For example, the AEF has obtained the SUPI or SUCI of the API invoker from the core network.

In addition, the AEF also needs to pre-verify a certificate of the API invoker, and the certificate may be provided by the CAPIF core function.

Further, in response to the authenticated first identity information being identical to the identity of the API invoker in the certificate, and the information in the service API invocation request message matching the information in the token, the AEF executes the subsequent step 605.

Alternatively, in response to the identity of the API invoker in the certificate being mapped to the authenticated first identity information, and the information in the service API invocation request message matching the information in the token, the AEF performs the subsequent step 605.

In the step 605, in response to the verification result indicating that the token is valid and the information in the service API invocation request message matching the information in the token, a service API invocation response message is sent to the API invoker through the second secure connection.

The service API invocation response message carries the target resource.

In the above embodiments, the AEF may send the service API invocation response message to the API invoker, thereby providing the target resource to the API invoker, and ensuring the security and reliability of enabling, during the API invocation procedure, user authorization to obtain the target resource.

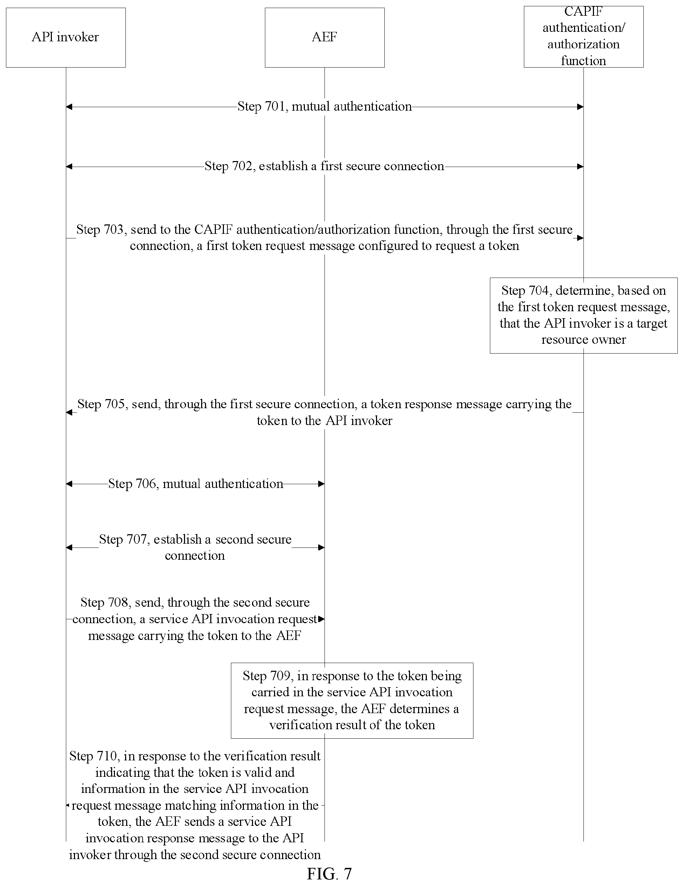

In some embodiments, reference is made to FIG. 7. FIG. 7 is a flowchart showing a method for invoking an API according to an embodiment, and the method may include steps 701 to 710.

In the step 701, the API invoker performs mutual authentication with the CAPIF authentication/authorization function.

In embodiments of the present disclosure, the API invoker may be a UE or an AF, which is not limited in the present disclosure.

The CAPIF authentication/authorization function may include but is not limited to a CAPIF core function and a CAPIF authentication/authorization function. Alternatively, the CAPIF authentication/authorization function may be a network function deployed by an operator, including but not limited to a NEF.

In an implementation, the API invoker may perform the mutual authentication with the CAPIF authentication/authorization function based on a certificate.

In another implementation, the API invoker may perform the mutual authentication with the CAPIF authentication/authorization function based on a Generic Bootstrapping Architecture (GBA)-based authentication mechanism.

In another implementation, the API invoker may perform the mutual authentication with the CAPIF authentication/authorization function based on an Authentication and Key Management for Applications (AKMA)-based authentication mechanism.

In an example, the CAPIF authentication/authorization function is the CAPIF core function, the API invoker may authenticate the CAPIF core function based on the certificate, and the CAPIF core function may authenticate the API invoker based on the GBA-based authentication mechanism, the AKMA-based authentication mechanism or the certificate-based authentication mechanism.

The CAPIF core function may generate the certificate for the API invoker after the API invoker onboarding procedure.

In another example, the CAPIF authentication/authorization function is the authorization function, the API invoker may authenticate the authorization function based on the certificate, and the authorization function may authenticate the API invoker based on the GBA-based authentication mechanism, the AKMA-based authentication mechanism or the certificate-based authentication mechanism.

The certificate may be assigned by the CAPIF core function.

In the step 702, the API invoker establishes a first secure connection with the CAPIF authentication/authorization function.

In embodiments of the present disclosure, when the mutual authentication between the API invoker and the CAPIF authentication/authorization function is passed, the API invoker may establish the first secure connection with the CAPIF authentication/authorization function via a TLS.

In the step 703, the API invoker sends to the CAPIF authentication/authorization function, through the first secure connection, a first token request message configured to request a token.

In embodiments of the present disclosure, the token is configured to authorize the API invoker to obtain, modify or set a target resource of a target resource owner. The API invoker is the target resource owner, and the target resource includes but is not limited to location information, QoS information of the target resource owner.

In an example, the first token request message may include but is not limited to at least one of: an identity of the API invoker; an identity of the target resource owner; an identity of the target resource; an identity of a service API requested by the API invoker; an identity of a service requested by the API invoker; or an identity of a service operation requested by the API invoker.

The identity of the API invoker includes but is not limited to the following three categories.

The first category is a terminal identity of the API invoker, including but not limited to an IMPI of the API invoker, a GPSI of the API invoker, an Application layer ID of the API invoker, an A-KID of the API invoker, a B-TID of the API invoker, or a SUCI of the API invoker.

The second category is an Application Function ID or an Application ID.

The third category is an Application Function Group ID or an Application Group ID.

The identity of the target resource owner may include but is not limited to an IMPI of a target UE, a GPSI of the target UE, an application layer ID of the target UE, an A-KID of the target UE, a B-TID of the target UE, or a SUCI of the target UE. The target UE is used to represent the target resource owner.

The identity of the target resource may identify the location information, the QoS information, etc. of the target resource owner, i.e., the target UE.

In an example, the identity of the target resource owner included in the first token request message is identical to the identity of the API invoker.

In another example, the identity of the target resource owner included in the first token request message is different from the identity of the API invoker, but the identity of the target resource owner and the identity of the API invoker indicate the same User Equipment (UE) or Application Function (AF).

In the step 704, the CAPIF authentication/authorization function determines, based on the first token request message, that the API invoker is the target resource owner.

The specific implementation is similar to the above step 302, which will not be repeated here.

In the step 705, the CAPIF authentication/authorization function sends, through the first secure connection, a token response message carrying the token to the API invoker.

In an embodiment of the present disclosure, the CAPIF authentication/authorization function may determine, based on the first token request message, that the API invoker is the target resource owner, and then send the token response message carrying the token to the API invoker.

In an example, the token includes but is not limited to at least one of: a token type; an identity of the CAPIF authentication/authorization function; an identity of the API invoker; an identity of a service API requested by the API invoker; an identity of a service requested by the API invoker; an identity of a service operation requested by the API invoker; an identity of the target resource; an identity of the target resource owner; an identity of the AEF; a validity expiration time of the token; or a CAPIF authentication/authorization function token.

The token type may be a refresh token or an access token.

The identity of the CAPIF authentication/authorization function includes but is not limited to the following three categories.

The first category is domain name information, including but not limited to a Fully Qualified Domain Name (FQDN) of the CAPIF authentication/authorization function and an address of the CAPIF authentication/authorization function, including but not limited to an Internet Protocol (IP) address of the CAPIF authentication/authorization function.

The second category is a Network Function ID or a Network Function instance ID (or NF instance ID) of the CAPIF authentication/authorization function.

The third category is a Network Function Set ID of the CAPIF authentication/authorization function, etc.

The identity of the API invoker includes but is not limited to the following three categories.

The first category is a terminal identity of the API invoker, including but not limited to an IMPI of the API invoker, a GPSI of the API invoker, an Application layer ID of the API invoker, an A-KID of the API invoker, a B-TID of the API invoker, or a SUCI of the API invoker.

The second category is an Application Function ID or an Application ID.

The third category is an Application Function Group ID or an Application Group ID.

The identity of the expected service API may refer to an identity of an API that the CAPIF authentication/authorization function expects to be able to serve the API invoker.

The identity of the service requested by the API invoker may refer to an identity of a service that the API invoker requests the target resource owner to authorize.

The identity of the service operation requested by the API invoker may refer to an identity of a service operation that the API invoker requests the target resource owner to authorize.

The identity of the target resource may identify the location information, the QoS information, etc. of the target resource owner.

The identity of the target resource owner may include but is not limited to an IMPI of a target UE, a GPSI of the target UE, an Application layer ID of the target UE, an A-KID of the target UE, a B-TID of the target UE, or a SUCI of the target UE. The target UE is used to represent the target resource owner.

In an embodiment of the present disclosure, the target resource owner and the API invoker are the same UE or the same AF.

The identity of the AEF includes but is not limited to the following three categories.

The first category is domain name information of the AEF, including but not limited to a FQDN and an IP address of the AEF.

The second category is a Network Function instance ID (or a NF instance ID) or a Network Function ID of the AEF.

The third category is a Network Function Set ID.

In the step 706, the API invoker performs mutual authentication with the AEF.

In an implementation, the API invoker may perform the mutual authentication with the AEF based on a certificate.

In another implementation, the API invoker may perform the mutual authentication with the AEF based on a GBA-based authentication mechanism.

In another implementation, the API invoker may perform the mutual authentication with the AEF based on an AKMA-based authentication mechanism.

In an example, the API invoker may authenticate the AEF based on the certificate, and the AEF may authenticate the API invoker based on the GBA-based authentication mechanism, the AKMA-based authentication mechanism or the certificate-based authentication mechanism.

The certificate may be assigned by the CAPIF core function.

In the step 707, the API invoker establishes a second secure connection with the AEF.

In embodiments of the present disclosure, when the mutual authentication between the API invoker and the AEF is passed, the API invoker may establish a second secure connection with the AEF via a TLS.

In the step 708, the API invoker sends, through the second secure connection, a service API invocation request message carrying the token to the AEF.

In the step 709, in response to the token being carried in the service API invocation request message, the AEF determines a verification result of the token.

The specific implementation is similar to the step 604, which will not be repeated here.

In the step 710, in response to the verification result indicating that the token is valid and information in the service API invocation request message matching information in the token, the AEF sends a service API invocation response message to the API invoker through the second secure connection.

The service API invocation response message carries the target resource.

In the above embodiments, the API invoker can obtain the target resource of the target resource owner based on user authorization, where the API invoker is the target resource owner, thereby achieving the purpose of enabling the user authorization during the API invocation procedure, with high availability.

Corresponding to embodiments of the aforementioned application function implementation method, the present disclosure further provides embodiments of an application function implementation apparatus.

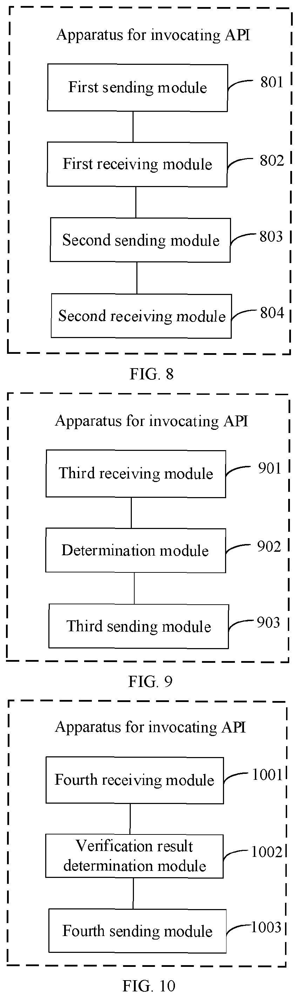

Reference is made to FIG. 8. FIG. 8 is a block diagram showing an apparatus for invoking an API according to an embodiment, which is applied to an API invoker. The apparatus includes:
a first sending module 801, configured to send to a Common API Framework (CAPIF) authentication/authorization function a first token request message configured to request a token, and the token is configured to authorize the API invoker to obtain, modify or set a target resource of a target resource owner;
a first receiving module 802, configured to receive a token response message sent by the CAPIF authentication/authorization function, and the token is carried in the token response message;
a second sending module 803, configured to send a service API invocation request message carrying the token to an API Exposure Function (AEF) based on the token; and
a second receiving module 804, configured to receive a service API invocation response message returned by the AEF, and the target resource is carried in the service API invocation response message.

Reference is made to FIG. 9. FIG. 9 is a block diagram showing another apparatus for invoking an API according to an embodiment, which is applied to a Common API Framework (CAPIF) authentication/authorization function. The apparatus includes:
a third receiving module 901, configured to receive a first token request message sent by an API invoker, the first token request message is configured to request a token, and the token is configured to authorize the API invoker to obtain a target resource of a target resource owner;
a determination module 902, configured to determine, based on the first token request message, that the API invoker is the target resource owner; and
a third sending module 903, configured to send a token response message carrying the token to the API invoker.

Reference is made to FIG. 10. FIG. 10 is a block diagram showing another apparatus for invoking an API according to an embodiment, which is applied to an API Exposure Function (AEF). The apparatus includes:
a fourth receiving module 1001, configured to receive a service API invocation request message sent by an API invoker;
a verification result determination module 1002, configured to, in response to a token being carried in the service API invocation request message, determine a verification result of the token, the token is configured to authorize the API invoker to obtain, modify or set a target resource of a target resource owner; and
a fourth sending module 1003, configured to, in response to the verification result indicating that the token is valid and information in the service API invocation request message matching information in the token, send a service API invocation response message to the API invoker, and the target resource is carried in the service API invocation response message.

For the apparatus embodiments, since they basically correspond to the method embodiments, the relevant parts can be referred to the description of the method embodiments. The apparatus embodiments described above are only illustrative. The units described as separated parts may or may not be physically separated, and the parts shown as units may or may not be physical units, that is, the units may be located in one place, or may be distributed over a plurality of network units. Some or all of the modules may be selected according to actual needs to achieve the objectives of the solutions of the present disclosure. Those of ordinary skill in the art can understand and implement the present disclosure without paying creative labor.

Correspondingly, the present disclosure further provides an apparatus for invoking an API, including:
a processor; and
a memory configured to store processor-executable instructions;
the processor is configured to execute any method for invoking the API on the API invoker side as described above.

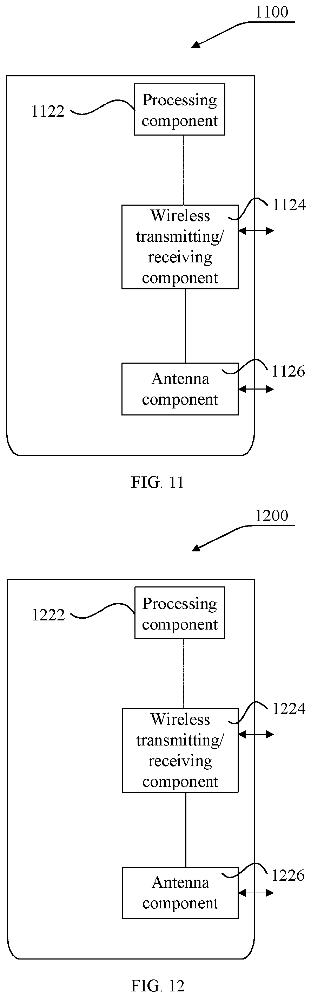

As shown in FIG. 11, FIG. 11 is a schematic structural diagram showing an apparatus 1100 for invoking an API according to an embodiment. The apparatus 1100 may be provided as the API invoker, and the API invoker may be a UE or an AF, which is not limited by the present disclosure. Referring to FIG. 11, the apparatus 1100 includes a processing component 1122, a wireless transmitting/receiving component 1124, an antenna component 1126, and a signal processing part specific to a wireless interface. The processing component 1122 may further include at least one processor.

One of processors in the processing component 1122 may be configured to perform any method for invoking the API on the API invoker side as described above.

Correspondingly, the present disclosure further provides an apparatus for invoking an API, including:
a processor; and
a memory configured to store processor-executable instructions;
the processor is configured to execute any method for invoking the API on the CAPIF authentication/authorization function side as described above.

As shown in FIG. 12, FIG. 12 is a schematic structural diagram showing an apparatus 1200 for invoking an API according to an embodiment. The apparatus 1200 may be provided as the CAPIF authentication/authorization function, and the CAPIF authentication/authorization function includes but is not limited to the CAPIF core function and the CAPIF authentication/authorization function. Alternatively, the CAPIF authentication/authorization function may be a network function deployed by an operator. Referring to FIG. 12, the apparatus 1200 includes a processing component 1222, a wireless transmitting/receiving component 1224, an antenna component 1226, and a signal processing part specific to a wireless interface. The processing component 1222 may further include at least one processor.

One of processors in the processing component 1222 may be configured to perform any method for invoking the API on the CAPIF authentication/authorization function side as described above.

Correspondingly, the present disclosure further provides an apparatus for invoking an API, including:
a processor; and
a memory configured to store processor-executable instructions;
the processor is configured to execute any method for invoking the API on the AEF side as described above.

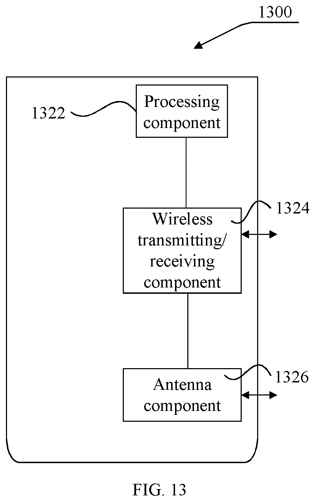

As shown in FIG. 13, FIG. 13 is a schematic structural diagram showing an apparatus 1300 for invoking an API according to an embodiment. The apparatus 1300 may be provided as the AEF. Referring to FIG. 13, the apparatus 1300 includes a processing component 1322, a wireless transmitting/receiving component 1324, an antenna component 1326, and a signal processing part specific to a wireless interface. The processing component 1322 may further include at least one processor.

One of processors in the processing component 1322 may be configured to perform any method for invoking the API on the AEF side as described above.

Other embodiments of the present disclosure will be apparent to those skilled in the art from consideration of the specification and practice of the present disclosure disclosed herein. The present application is intended to cover any variations, uses, or adaptations of the present disclosure, which are in accordance with the general principles of the present disclosure and include common general knowledge or conventional technical means in the art that are not disclosed in the present disclosure. The specification and embodiments are illustrative, and the real scope and spirit of the present disclosure is defined by the appended claims.

It should be understood that the present disclosure is not limited to the precise structures that have been described above and shown in the drawings, and various modifications and changes can be made without departing from the scope thereof. The scope of the present disclosure is limited only by the appended claims.

## Claims

1. A method for invoking an Application Program Interface (API), performed by an API invoker, and comprising:
sending to a Common API Framework (CAPIF) authentication/authorization function a first token request message configured to request a token, wherein the token is configured to authorize the API invoker to obtain, modify or set a target resource of a target resource owner;
receiving a token response message sent by the CAPIF authentication/authorization function, wherein the token is carried in the token response message;
sending a service API invocation request message to an API Exposure Function (AEF) based on the token; and
receiving a service API invocation response message returned by the AEF, wherein the target resource is carried in the service API invocation response message.

2. The method according to claim 1, wherein the first token request message comprises at least one of:
an identity of the API invoker;
an identity of the target resource owner;
an identity of the target resource;
an identity of a service API requested by the API invoker;
an identity of a service requested by the API invoker; or
an identity of a service operation requested by the API invoker.

3. The method according to claim 1, wherein the token comprises at least one of:
a token type;
an identity of the CAPIF authentication/authorization function;
an identity of the API invoker;
an identity of an expected service API;
an identity of a service requested by the API invoker;
an identity of a service operation requested by the API invoker;
an identity of the target resource;
an identity of the target resource owner;
a geographic area where the API invoker is located when accessing the target resource;
an identity of the AEF; or
a validity expiration time of the token.

4. The method according to claim 1, wherein sending the service API invocation request message to the API Exposure Function (AEF) based on the token comprises:
in response to a first token whose token type is a refresh token being carried in the token response message, sending to the CAPIF authentication/authorization function a second token request message carrying the first token, wherein the second token request message is configured to request a second token whose token type is an access token;
receiving the second token whose token type is the access token returned by the CAPIF authentication/authorization function; and
sending to the AEF the service API invocation request message carrying the second token.

5. The method according to claim 1, wherein sending the service API invocation request message to the API Exposure Function (AEF) based on the token comprises:
in response to a second token whose token type is an access token being carried in the token response message, sending to the AEF the service API invocation request message carrying the second token.

6. The method according to any one of claims 2 to 5, wherein the identity of the target resource owner is identical to the identity of the API invoker; or
the identity of the target resource owner is different from the identity of the API invoker, and the identity of the target resource owner and the identity of the API invoker indicate the same User Equipment (UE) or Application Function (AF).

7. The method according to claim 1, wherein the method further comprises:
performing mutual authentication with the CAPIF authentication/authorization function;
establishing a first secure connection with the CAPIF authentication/authorization function in a case where the mutual authentication with the CAPIF authentication/authorization function is passed.

8. The method according to claim 7, wherein performing the mutual authentication with the CAPIF authentication/authorization function comprises any one of:
performing the mutual authentication with the CAPIF authentication/authorization function based on a certificate;
performing the mutual authentication with the CAPIF authentication/authorization function based on a Generic Bootstrapping Architecture (GBA)-based authentication mechanism; or
performing the mutual authentication with the CAPIF authentication/authorization function based on an Authentication and Key Management for Applications (AKMA)-based authentication mechanism.

9. The method according to claim 7, wherein sending to the Common API Framework (CAPIF) authentication/authorization function the first token request message configured to request the token comprises:
when the first secure connection with the CAPIF authentication/authorization function is established, sending the first token request message to the CAPIF authentication/authorization function through the first secure connection.

10. The method according to claim 1, wherein the method further comprises:
performing mutual authentication with the AEF; and
establishing a second secure connection with the AEF, in a case where the mutual authentication with the AEF is passed.

11. The method according to claim 9, wherein performing the mutual authentication with the AEF comprises any one of:
performing the mutual authentication with the AEF based on a certificate;
performing the mutual authentication with the AEF based on a GBA-based authentication mechanism; or
performing the mutual authentication with the AEF based on an AKMA-based authentication mechanism.

12. The method according to claim 1, wherein sending the service API invocation request message carrying the token to the API Exposure Function (AEF) comprises:
establishing a second secure connection with the AEF, and sending, through the second secure connection, the service API invocation request message carrying the token to the AEF.

13. The method according to claim 1, wherein the API invoker is a User Equipment (UE) or an Application Function (AF); and/or
the CAPIF authentication/authorization function comprises a CAPIF core function or an authorization function.

14. A method for invoking an Application Program Interface (API), performed by a Common API Framework (CAPIF) authentication/authorization function, and comprising:
receiving a first token request message sent by an API invoker, wherein the first token request message is configured to request a token, and the token is configured to authorize the API invoker to obtain a target resource of a target resource owner;
determining, based on the first token request message, that the API invoker is the target resource owner; and
sending a token response message to the API invoker, wherein the token is carried in the token response message.

15. The method according to claim 14, wherein the first token request message comprises at least one of:
an identity of the API invoker;
an identity of the target resource owner;
an identity of the target resource;
an identity of a service API requested by the API invoker;
an identity of a service requested by the API invoker; or
an identity of a service operation requested by the API invoker.

16. The method according to claim 14, wherein determining, based on the first token request message, that the API invoker is the target resource owner comprises:
in response to an identity of the API invoker in the first token request message being identical to an identity of the target resource owner, and the identity of the API invoker and the identity of the target resource owner being mapped to first identity information of the API invoker through a preset mapping configuration strategy, determining that the API invoker is the target resource owner.

17. The method according to claim 14, wherein determining, based on the first token request message, that the API invoker is the target resource owner comprises:
in response to an identity of the API invoker in the first token request message being different from an identity of the target resource owner, according to a preset mapping configuration strategy, mapping the identity of the API invoker to first identity information which is able to be authenticated, and mapping the identity of the target resource owner to second identity information which is able to be authenticated; and
in response to the first identity information and the second identity information indicating the same UE or application function, determining that the API invoker is the target resource owner.

18. The method according to claim 16 or 17, wherein the method further comprises:
determining that the first identity information of the API invoker has been authenticated, and determining that the API invoker is the target resource owner.

19. The method according to claim 14, wherein the token comprises at least one of:
a token type;
an identity of the CAPIF authentication/authorization function;
an identity of the API invoker;
an identity of an expected service API;
an identity of a service requested by the API invoker;
an identity of a service operation requested by the API invoker;
an identity of the target resource;
an identity of the target resource owner;
a geographic area where the API invoker is located when accessing the target resource;
an identity of an API Exposure Function (AEF); or
a validity expiration time of the token.

20. The method according to claim 14, wherein the method further comprises:
in response to a first token whose token type is a refresh token being carried in the token response message, receiving a second token request message sent by the API invoker when the API invoker needs to obtain the target resource, wherein the second token request message is configured to request a second token whose token type is an access token, and the first token is carried in the second token request message; and
based on the second token request message, verifying that the first token is legal, and sending the second token whose token type is the access token to the API invoker.

21. The method according to claim 14, wherein the method further comprises:
performing mutual authentication with the API invoker; and
establishing a first secure connection with the API invoker in a case where the mutual authentication with the API invoker is passed.

22. The method according to claim 21, wherein performing the mutual authentication with the API invoker comprises any one of:
performing the mutual authentication with the API invoker based on a certificate;
performing the mutual authentication with the API invoker based on a Generic Bootstrapping Architecture (GBA)-based authentication mechanism; or
performing the mutual authentication with the API invoker based on an Authentication and Key Management for Applications (AKMA)-based authentication mechanism.

23. The method according to claim 21, wherein receiving the first token request message configured to request the token sent by the API invoker comprises:
when the first secure connection with the API invoker is established, receiving the first token request message sent, through the first secure connection, by the API invoker.

24. The method according to claim 14, wherein the API invoker is a User Equipment (UE) or an Application Function (AF); and/or
the CAPIF authentication/authorization function comprises a CAPIF core function or an authorization function.

25. A method for invoking an Application Program Interface (API), performed by an API Exposure Function (AEF), and comprising:
receiving a service API invocation request message sent by an API invoker;
in response to a token being carried in the service API invocation request message, determining a verification result of the token, wherein the token is configured to authorize the API invoker to obtain, modify or set a target resource of a target resource owner; and
in response to the verification result indicating that the token is valid and information in the service API invocation request message matching information in the token, sending a service API invocation response message to the API invoker, wherein the target resource is carried in the service API invocation response message.

26. The method according to claim 25, wherein determining the verification result of the token comprises:
verifying, by the AEF, the token based on a public key of a CAPIF authentication/authorization function, and determining the verification result.

27. The method according to claim 25, wherein determining the verification result of the token comprises:
sending the token to a CAPIF authentication/authorization function; and
receiving the verification result of the token returned by the CAPIF authentication/authorization function.

28. The method according to claim 25, wherein the method further comprises:
in response to the verification result indicating that the token is invalid, terminating an API invocation procedure.

29. The method according to claim 25, wherein the method further comprises:
in response to the token being not carried in the service API invocation request message, sending a service API invocation rejection message to the API invoker.

30. The method according to claim 25, wherein the method further comprises:
determining that first identity information of the API invoker has been authenticated;
determining that the verification result indicates that the token is valid;
in response to the authenticated first identity information being identical to an identity of the API invoker in the token, and the information in the service API invocation request message failing to match the information in the token, sending a service API invocation rejection message to the API invoker; or
in response to the identity of the API invoker in the token being able to be mapped to the authenticated first identity information, and the information in the service API invocation request message failing to match the information in the token, sending the service API invocation rejection message to the API invoker.

31. The method according to claim 25, wherein the method further comprises:
determining that first identity information of the API invoker has been authenticated;
in response to the verification result indicating that the token is valid and the information in the service API invocation request message matching the information in the token, sending the service API invocation response message to the API invoker comprises:
in response to the authenticated first identity information being identical to an identity of the API invoker in the token, the verification result indicating that the token is valid, and the information in the service API invocation request message matching the information in the token, sending the service API invocation response message to the API invoker; or
in response to the identity of the API invoker in the token being able to be mapped to the authenticated first identity information, the verification result indicating that the token is valid, and the information in the service API invocation request message matching the information in the token, sending the service API invocation response message to the API invoker.

32. The method according to claim 25, wherein the token comprises at least one of:
a token type;
an identity of a Common API Framework (CAPIF) authentication/authorization function;
an identity of the API invoker;
an identity of an expected service API;
an identity of a service requested by the API invoker;
an identity of a service operation requested by the API invoker;
an identity of the target resource;
an identity of the target resource owner;
a geographic area where the API invoker is located when accessing the target resource;
an identity of the AEF; or
a validity expiration time of the token.

33. The method according to claim 25, wherein the method further comprises:
determining that a second token whose token type is an access token is carried in the service API invocation request message; and
determining the verification result of the token comprises:
determining the verification result of the second token.

34. The method according to claim 25, wherein the method further comprises:
in response to the token carried in the service API invocation request message comprising a geographic area where the API invoker is located when accessing the target resource, sending a location request message to a core network device, wherein the location request message is configured to request location information of the API invoker; and
in response to location information provided by the core network device being consistent with the geographic area comprised in the token, performing a step of in response to the verification result indicating that the token is valid and the information in the service API invocation request message matching the information in the token, sending the service API invocation response message to the API invoker.

35. The method according to claim 25, wherein the method further comprises:
performing mutual authentication with the API invoker; and
establishing a second secure connection with the API invoker in a case where the mutual authentication with the API invoker is passed.

36. The method according to claim 35, wherein performing the mutual authentication with the API invoker comprises any one of:
performing the mutual authentication with the API invoker based on a certificate;
performing the mutual authentication with the API invoker based on a Generic Bootstrapping Architecture (GBA)-based authentication mechanism; or
performing the mutual authentication with the API invoker based on an Authentication and Key Management for Applications (AKMA)-based authentication mechanism.

37. The method according to claim 25, wherein receiving the service API invocation request message sent by the API invoker comprises:
establishing a second secure connection with the API invoker, and receiving, through the second secure connection, the service API invocation request message sent by the API invoker.

38. The method according to any one of claims 25 to 37, wherein the API invoker is a User Equipment (UE) or an Application Function (AF); and/or
the CAPIF authentication/authorization function comprises a CAPIF core functions or an authorization functions.

39. An apparatus for invoking an Application Program Interface (API), applied to an API invoker, and comprising:
a first sending module, configured to send to a Common API Framework (CAPIF) authentication/authorization function a first token request message configured to request a token, wherein the token is configured to authorize the API invoker to obtain, modify or set a target resource of a target resource owner;
a first receiving module, configured to receive a token response message sent by the CAPIF authentication/authorization function, wherein the token is carried in the token response message;
a second sending module, configured to send a service API invocation request message to an API Exposure Function (AEF) based on the token; and
a second receiving module, configured to receive a service API invocation response message returned by the AEF, wherein the target resource is carried in the service API invocation response message.

40. An apparatus for invoking an Application Program Interface (API), applied to a Common API Framework (CAPIF) authentication/authorization function, and comprising:
a third receiving module, configured to receive a first token request message sent by an API invoker, wherein the first token request message is configured to request a token, and the token is configured to authorize the API invoker to obtain a target resource of a target resource owner;
a determination module, configured to determine, based on the first token request message, that the API invoker is the target resource owner; and
a third sending module, configured to send a token response message to the API invoker, wherein the token is carried in the token response message.

41. An apparatus for invoking an Application Program Interface (API), applied to an API Exposure Function (AEF), and comprising:
a fourth receiving module, configured to receive a service API invocation request message sent by an API invoker;
a verification module, configured to, in response to a token being carried in the service API invocation request message, determine a verification result of the token, wherein the token is configured to authorize the API invoker to obtain, modify or set a target resource of a target resource owner; and
a fourth sending module, configured to, in response to the verification result indicating that the token is valid and information in the service API invocation request message matching information in the token, send a service API invocation response message to the API invoker, wherein the target resource is carried in the service API invocation response message.

42. An apparatus for invoking an Application Program Interface (API), comprising:
a processor; and
a memory configured to store processor-executable instructions;
wherein the processor is configured to execute the method for invoking the Application Program Interface (API) according to any one of claims 1 to 13.

43. An apparatus for invoking an Application Program Interface (API), comprising:
a processor; and
a memory configured to store processor-executable instructions;
wherein the processor is configured to execute the method for invoking the Application Program Interface (API) according to any one of claims 14 to 24.

44. An apparatus for invoking an Application Program Interface (API), comprising:
a processor; and
a memory configured to store processor-executable instructions;
wherein the processor is configured to execute the method for invoking the Application Program Interface (API) according to any one of claims 25 to 38.
